# EUROPÄISCHE PATENTSCHRIFT

(11) **EP 2 927 764 B1**
(45) Veröffentlichungstag und Bekanntmachung des Hinweises auf die Patenterteilung: **29.06.2016**
(21) Anmeldenummer: 14163149.9
(22) Anmeldetag: 02.04.2014
(51) Int. Cl.: G05B 19/4097

(54) **Numerische Steuerung mit Anzeige einer Vorschau bei Änderungen des Teileprogramms**
Numerical controller with indicator for preview in case of changes to the sub-program
Commande numérique avec affichage de visualisation lors de changements du programme de pièces

(43) Veröffentlichungstag der Anmeldung: 07.10.2015
(73) Patentinhaber: Siemens Aktiengesellschaft, 80333 München (DE)
(72) Erfinder: Sinn, Dr. Christof, 75417 Mühlacker (DE); Stolper, Thilo, 70191 Stuttgart (DE)

(56) Entgegenhaltungen:
- WO-A1-03/056401
- JP-A- H1 145 106

## Beschreibung

Die vorliegende Erfindung betrifft ein Betriebsverfahren für eine numerische Steuerung,
- wobei die numerische Steuerung Zugriff auf ein Teileprogramm hat, das von der numerischen Steuerung ausführbar ist,
- wobei von der numerischen Steuerung durch Ausführen des Teileprogramms eine Produktionsmaschine steuerbar ist,
- wobei der numerischen Steuerung von einem Bediener über eine Bedienerschnittstelle ein Auswahlbefehl vorgegeben wird, mittels dessen eine Programmanweisung des Teileprogramms selektiert wird, der mindestens ein Parameter zugeordnet ist,
- wobei die selektierte Programmanweisung beim Ausführen des Teileprogramms von der numerischen Steuerung in eine von dem mindestens einen Parameter abhängige Verfahrbewegung eines das Werkstück bearbeitenden Werkzeugs umgesetzt wird,
- wobei die numerische Steuerung anhand von Daten, welche zumindest die dreidimensionale Geometrie des Werkstücks beschreiben, mindestens ein Bild des Werkstücks ermittelt,
- wobei die numerische Steuerung den mindestens einen Parameter der parametrisierten Programmanweisung in vom Bediener änderbarer Form und das Bild über die Bedienerschnittstelle an den Bediener der numerischen Steuerung ausgibt,
- wobei die numerische Steuerung im Falle einer Änderung eines Parameters der selektierten Programmanweisung anhand geänderter Daten, welche zumindest die geänderte dreidimensionale Geometrie des Werkstücks beschreiben, mindestens ein geändertes Bild des Werkstücks ermittelt und das geänderte Bild über die Bedienerschnittstelle an den Bediener der numerischen Steuerung ausgibt,
- wobei die numerische Steuerung, sobald sie vom Bediener einen entsprechenden Speicherbefehl entgegengenommen hat, ein entsprechend der geänderten Programmanweisung modifiziertes Teileprogramm speichert.

Die vorliegende Erfindung betrifft weiterhin ein Computerprogramm, wobei das Computerprogramm Maschinencode umfasst, der von einer numerischen Steuerung unmittelbar ausführbar ist, wobei die Ausführung des Maschinencodes durch die numerische Steuerung bewirkt, dass die numerische Steuerung ein derartiges Betriebsverfahren ausführt.

Die vorliegende Erfindung betrifft weiterhin eine numerische Steuerung, in der ein von der numerischen Steuerung ausführbares derartiges Computerprogramm gespeichert ist.

Die oben genannten Gegenstände sind beispielsweise aus der WO 03/056 401 A1 und der JP H11 045 106 A bekannt.

Numerische Steuerungen arbeiten im laufenden Betrieb üblicherweise ein sogenanntes Teileprogramm ab. Das Teileprogramm legt fest, auf welche Weise lage- und drehzahlgeregelte Achsen der Produktionsmaschine (insbesondere einer Werkzeugmaschine) gesteuert werden. Theoretisch ist es möglich, das Teileprogramm direkt über die Bedienerschnittstelle der numerischen Steuerung zu generieren. Über die Bedienerschnittstelle der numerischen Steuerung steht jedoch nur ein deutlich eingeschränkter Befehlsvorrat zur Verfügung. In der Praxis wird das Teileprogramm daher, ausgehend von mittels eines CAD-Systems generierten Daten, mittels eines CAM-Systems generiert. Mittels des CAM-Systems ist der volle Befehlsvorrat der numerischen Steuerung ausnutzbar. Das CAM-System kann einen sogenannten Postprozessor mit umfassen.

Aufgrund der Generierung des Teileprogramms mittels des CAM-Systems umfasst das Teileprogramm zwei Arten von Programmanweisungen. Zum einen enthält das Teileprogramm Freiformbearbeitungen, zum anderen sogenannte Zyklen.

Freiformbearbeitungen sind Bearbeitungen, bei denen der volle Befehlsvorrat der numerischen Steuerung genutzt wird. Eine Freiformbearbeitung ist mittels des eingeschränkten Befehlsvorrats, der über die Bedienerschnittstelle der numerischen Steuerung generiert werden kann, nicht programmierbar. Freiformbearbeitungen liegen innerhalb des Teileprogramms als Abfolge von einzelnen Steuerbefehlen für die lage- und drehzahlgeregelten Achsen der Produktionsmaschine vor. Die Steuerbefehle von Freiformbearbeitungen sind jeweils eine Programmanweisung.

Bei Freiformbearbeitungen kann die Abfolge der einzelnen Steuerbefehle sehr lang sein (teilweise mehrere Millionen von Steuerbefehlen). Das Teileprogramm enthält hingegen in der Regel nicht mehr die parametrisierten Beschreibungen als solche, welche der Abfolge der einzelnen Steuerbefehle zu Grunde liegen. Die Parameter können der Abfolge der Steuerbefehle auch nicht mehr entnommen werden. Beispiele derartiger Kriterien sind der Zeilenabstand, die Werkzeuggeometrie, die Bearbeitungsstrategie, Auswirkungen von Kollisionsvermeidungsrechnungen, technologische Werte wie beispielsweise die Anstellung des Werkzeugs usw.

Zyklen sind die Befehle des eingeschränkten Befehlsvorrats, welche über die Bedienerschnittstelle der numerischen Steuerung parametriert werden können. Auch ein Zyklus kann von dem Bediener des CAM-Systems programmiert werden. Bei einem Zyklus gibt der Bediener des CAM-Systems dem CAM-System - ebenso wie bei einer Freiformbearbeitung - eine Anzahl von Parametern vor. Im Gegensatz zu einer Freiformbearbeitung enthält das vom CAM-System generierte Teileprogramm jedoch nicht direkt die Abfolge der zugehörigen einzelnen Steuerbefehle für die lage- und drehzahlgeregelten Achsen der Produktionsmaschine, sondern einen Unterprogrammaufruf für den Zyklus sowie die entsprechende Parametrisierung. Die Umsetzung des Zyklus in die Abfolge der einzelnen Steuerbefehle für die lage- und drehzahlgeregelten Achsen der Produktionsmaschine wird in diesem Fall auf Seiten der numerischen Steuerung vorgenommen. Ein Zyklus stellt also eine einzelne Programmanweisung dar, die von der numerischen Steuerung in eine Abfolge einzelner Steuerbefehle umgesetzt wird.

Der Bediener des CAM-Systems ist in der Regel eine vom Bediener der numerischen Steuerung verschiedene Person. In manchen Fällen fehlen dem Bediener des CAM-Systems technische Kenndaten der Produktionsmaschine, die mittels des Teileprogramms gesteuert werden soll. Dies kann zur Folge haben, dass die Ausführung des Teileprogramms durch die numerische Steuerung zu nicht ordnungsgemäß hergestellten Werkstücken führt. Je nach Lage des Einzelfalls kann es in derartigen Fällen erforderlich sein, erneut grundlegend neu das Teileprogramm zu ermitteln. In vielen Fällen ist für den Bediener der numerischen Steuerung jedoch aufgrund seiner Kenntnis der Produktionsmaschine und deren technischer Kenndaten ersichtlich, welcher Parameter welcher parametrisierten Beschreibung geändert werden muss, um ein ordnungsgemäßes Werkstück herstellen zu können.

Im Stand der Technik kann der Bediener der numerischen Steuerung Änderungen des Teileprogramms nur dann durchführen, wenn der zu ändernde Teil des Teileprogramms in der numerischen Steuerung in parametrisierter Form vorliegt, es sich also um einen parametrisierten Zyklus handelt. In allen anderen Fällen muss sich der Bediener der numerischen Steuerung mit dem Bediener des CAM-Systems in Verbindung setzen und diesem mitteilen, welche Parameter in welcher parametrisierten Beschreibung er geändert haben möchte. Der Bediener des CAM-Systems ruft daraufhin das CAM-System auf, ändert die entsprechende parametrisierte Beschreibung und erstellt sodann das Teileprogramm neu. Das entsprechend modifizierte Teileprogramm wird - in der Regel als Ersatz für das ursprüngliche Teileprogramm - an die numerische Steuerung übertragen.

Neuerdings sind auch Bestrebungen im Gange, dem Bediener der numerischen Steuerung Möglichkeiten zur Verfügung zu stellen, mittels derer er auch diejenigen Teile des Teileprogramms ändern kann, die in der numerischen Steuerung nicht in parametrisierter Form vorliegen. Diesbezüglich wird auf die ältere, nicht vorveröffentlichte europäische Patentanmeldung 13 165 313.1 verwiesen.

Wenn der zu ändernde Teil des Teileprogramms in der numerischen Steuerung in parametrisierter Form vorliegt, kann der Bediener der numerischen Steuerung die Änderung selbst vornehmen. Er ruft in diesem Fall über die Bedienerschnittstelle eine Ausgabemaske auf. In der Ausgabemaske gibt die numerische Steuerung die Parameter des entsprechenden Zyklus an den Bediener der numerischen Steuerung aus. Zusätzlich gibt die numerische Steuerung über die Ausgabemaske eine Darstellung der durch die Parameter des entsprechenden Zyklus bewirkten Bearbeitung an den Bediener aus. Die Darstellung kann animiert sein. Der Bediener der numerischen Steuerung ändert die Parameter und bestätigt danach die Änderung. Die numerische Steuerung speichert daraufhin das entsprechend modifizierte Teileprogramm ab.

Die Darstellung der bewirkten Bearbeitung ist im Stand der Technik rein schematischer Natur. Sie berücksichtigt weder die Stellung des entsprechenden Zyklus innerhalb des Teileprogramms noch die Anordnung und Orientierung der durch die Bearbeitung hergestellten Kontur innerhalb des durch das Teileprogramm als Ganzes hergestellten Werkstücks.

Die Vorgehensweise des Standes der Technik ist in verschiedener Hinsicht suboptimal. So ist es beispielsweise möglich, dass prinzipiell gleichwertige, orientierungsabhängige Parameter eines Zyklus (typisches Beispiel: Länge und Breite einer rechteckigen Kontur) verwechselt werden. Falls derselbe Zyklus mit verschiedenen Parametern mehrfach verwendet wird (Beispiel: Es soll dieselbe Kontur an verschiedenen Orten in das Werkstück eingebracht werden), kann es weiterhin geschehen, dass versehentlich der falsche Zyklus parametriert wird. Weiterhin ist aus der Darstellung nicht ohne weiteres erkennbar, welche Veränderung des herzustellenden Werkstücks durch die Änderung der Parameter eines bestimmten Zyklus bewirkt wird.

In der älteren, nicht vorveröffentlichten europäischen Patentanmeldung 13 164 931.1 ist ein Betriebsverfahren für eine numerische Steuerung beschrieben, bei dem die numerische Steuerung
- eine die selektierte Programmanweisung identifizierende Information über eine Rechner-Rechner-Verbindung direkt oder indirekt an ein CAM-System übermittelt, mittels dessen das Teileprogramm generiert wurde,
- von dem CAM-System ein Bild entgegennimmt, das mit einer durch Ausführen des Teileprogramms bis zur selektierten Programmanweisung bewirkten Bearbeitung des Werkstücks korrespondiert,
- zusätzlich zu dem mindestens einen Parameter der parametrisierten Programmanweisung auch das Bild über die Bedienerschnittstelle an den Bediener der numerischen Steuerung ausgibt und
- im Falle einer Änderung eines Parameters der selektierten Programmanweisung die Änderung an das CAM-System übermittelt, von dem CAM-System ein geändertes Bild entgegennimmt, das mit einer durch Ausführen des Teileprogramms bis zur geänderten Programmanweisung bewirkten Bearbeitung des Werkstücks korrespondiert, und das geänderte Bild über die Bedienerschnittstelle an den Bediener der numerischen Steuerung ausgibt.

Diese Vorgehensweise stellt bereits einen nennenswerten Fortschritt gegenüber dem konventionellen Stand der Technik dar. Auch diese Vorgehensweise ist jedoch noch verbesserungsfähig.

Die Aufgabe der vorliegenden Erfindung besteht darin, die Nachteile des Standes der Technik zu vermeiden. Insbesondere soll dem Bediener die Möglichkeit gegeben werden, jederzeit Änderungen von Parametern selektierter Programmanweisungen vornehmen zu können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 10.

Erfindungsgemäß wird ein Betriebsverfahren der eingangs genannten Art dadurch ausgestaltet,
- dass die numerische Steuerung eine die selektierte Programmanweisung identifizierende Information über eine Rechner-Rechner-Verbindung direkt oder indirekt an ein CAM-System übermittelt,
- dass die numerische Steuerung die Daten, welche zumindest die dreidimensionale Geometrie des Werkstücks beschreiben, von dem CAM-System entgegennimmt,
- dass die numerische Steuerung im Falle einer Änderung eines Parameters der selektierten Programmanweisung die Änderung an das CAM-System übermittelt und die geänderten Daten von dem CAM-System entgegennimmt und
- dass die Daten und die geänderten Daten die dreidimensionale Geometrie des Werkstücks beschreiben, wie sie sich bei einer Ausführung des Teileprogramms bis einschließlich zur selektierten bzw. bis einschließlich zur geänderten Programmanweisung ergibt.

Aufgrund des dreidimensionalen Bildes steht dem Bediener jederzeit eine vollständige Informationen über das Werkstück, wie es sich bis zur Ausführung der selektierten Programmanweisung ergibt, zur Verfügung.

Es ist möglich, dass die numerische Steuerung eine vorbestimmte Anzahl von Bildern (mindestens ein Bild, eventuell aber auch mehrere Bilder) ermittelt und an den Bediener ausgibt und der Bediener die Bilder als solche nicht mehr ändern kann. Vorzugsweise jedoch nimmt die numerische Steuerung vom Bediener Darstellungsparameter entgegen und ermittelt das Bild und das geänderte Bild entsprechend den vorgegebenen Darstellungsparametern. Im einfachsten Fall kann der Bediener in diesem Fall nur auswählen, welche von mehreren möglichen Darstellungen ihm angezeigt wird, beispielsweise eine

Schnittdarstellung oder eine perspektivische Darstellung. Vorzugsweise jedoch legen die Darstellungsparameter bezüglich einer Schnittdarstellung und/oder einer perspektivischen Darstellung fest, wie die Darstellung skaliert und/oder gedreht ist.

In einer weiter bevorzugten Ausgestaltung umfassen die Daten und die geänderten Daten zusätzlich Bahndaten, welche eine Bahn des das Werkstück bearbeitenden Werkzeugs beschreiben. In diesem Fall blendet die numerische Steuerung die Bahn in das Bild und das geänderte Bild ein. Dadurch ergibt sich für den Bediener eine erleichterte intuitive Erfassung des Sachverhalts.

Vorzugsweise ist weiter vorgesehen, dass die numerische Steuerung in das Bild zusätzlich das Werkzeug einblendet und entlang der Bahn verfährt. Diese Vorgehensweise verbessert die intuitive Erfassung des Sachverhalts noch weiter.

Es ist möglich, dass die numerische Steuerung das Verfahren des Werkzeugs in dem Bild in Reaktion auf vom Bediener eingegebene Steuerkommandos stoppt und wieder aufnimmt. Alternativ oder zusätzlich ist es weiterhin möglich, dass die numerische Steuerung eine Geschwindigkeit, mit der das Werkzeug in dem Bild verfahren wird, in Abhängigkeit von Steuerkommandos des Bedieners einstellt. Durch beide Maßnahmen - insbesondere durch die Kombination beider Maßnahmen - können insbesondere kritische Bearbeitungsvorgänge besonders genau untersucht werden.

In dem Fall, dass ein Stoppen des Verfahrens des Werkzeugs relativ zum Werkstück möglich ist, ist bevorzugt, dass die numerischen Steuerung vom Bediener eine Position entlang der Bahn entgegennimmt und beim Stoppen des Werkzeugs in dem Bild das Werkzeug in dem Bild an der vom Bediener entgegengenommenen Position positioniert. Dadurch kann der Ort, an dem das Werkzeug in dem Bild gestoppt wird, auf einfache Weise festgelegt werden. Der Ort kann vom Bediener auf prinzipiell beliebige Weise vorgegeben werden. Besonders einfach ist es, wenn der Bediener in dem Bild, in dem die Bahn eingeblendet ist, mit einem Cursor oder einem Pointer oder dergleichen einen bestimmten Ort markiert und entweder durch das Markieren als solches das Werkzeug an diesem Ort stoppt oder das Werkzeug nach dem Markieren des betreffenden Ortes durch einen eigenständigen Stoppbefehl stoppt.

Vorzugsweise ist vorgesehen, dass die numerische Steuerung vom Bediener ein Steuerkommando entgegennimmt und in Abhängigkeit von dem Steuerkommando in dem Bild entweder bei unveränderter Darstellung des Werkstücks das Werkzeug verfährt oder bei unveränderter Darstellung des Werkzeugs das Werkstück verfährt.

In einer besonders bevorzugten Ausgestaltung der vorliegenden Erfindung ist vorgesehen, dass die numerische Steuerung durch Ausführen des Teileprogramms ein reales Werkstück bearbeitet und dass die numerische Steuerung das Werkzeug in dem Bild entsprechend der realen Bearbeitung des Werkstücks entlang der in das Bild eingeblendeten Bahn verfährt. Dadurch kann der Bediener über die Bedienerschnittstelle auf einfache Weise die Bearbeitung des Werkstücks entsprechend ihrem tatsächlichen Fortschritt beobachten.

Es ist möglich, dass die selektierte Programmanweisung des Teileprogramms Bestandteil einer Sequenz ist, die in der numerischen Steuerung in parametrisierter Form hinterlegt ist (Zyklus). Alternativ ist es möglich, dass die selektierte Programmanweisung Bestandteil einer Sequenz ist, die weder im Teileprogramm noch in der numerischen Steuerung in parametrisierter Form vorliegt (Freiformbearbeitung).

Es ist möglich, dass die numerische Steuerung im Falle einer Änderung des Parameters der selektierten Programmanweisung sofort
- die Änderung an das CAM-System übermittelt,
- von dem CAM-System die geänderten Daten entgegennimmt,
- das geänderte Bild des Werkstücks ermittelt und
- das geänderte Bild an den Bediener der numerischen Steuerung ausgibt.

In diesem Fall ergibt sich eine jederzeitige, interaktive Anpassung des Bildes an die geänderten Parameter. Alternativ ist es möglich, dass die numerische Steuerung diese Maßnahmen erst nach der Eingabe eines entsprechenden Freigabebefehls durch den Bediener ausführt.

Die Aufgabe wird weiterhin durch ein Computerprogramm mit den Merkmalen des Anspruchs 11 gelöst. Erfindungsgemäß wird ein Computerprogramm der eingangs genannten Art dadurch ausgestaltet, dass die Ausführung des Maschinencodes durch die numerische Steuerung bewirkt, dass die numerische Steuerung ein erfindungsgemäßes Betriebsverfahren ausführt.

Die Aufgabe wird weiterhin durch eine numerische Steuerung mit den Merkmalen des Anspruchs 12 gelöst. Erfindungsgemäß ist in einer numerischen Steuerung der eingangs genannten Art ein von der numerischen Steuerung ausführbares erfindungsgemäßes Computerprogramm gespeichert.

Für ein ordnungsgemäßes Funktionieren des erfindungsgemäßen Betriebsverfahrens kann es weiterhin erforderlich sein, dass der numerischen Steuerung das CAM-System bekannt ist, mittels dessen das Teileprogramm generiert wurde. Es ist gegebenenfalls möglich, dass diese Information in der numerischen Steuerung fest hinterlegt ist. Alternativ kann die entsprechende Information vom Bediener des CAM-Systems abgefragt werden. Vorzugsweise ermittelt die numerische Steuerung das entsprechende CAM-System selbsttätig anhand eines Headers des Teileprogramms.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Verbund mehrerer Einrichtungen,
- FIG 2: ein Hauptprogramm eines Teileprogramms,
- FIG 3: ein Unterprogramm eines Teileprogramms,
- FIG 4: eine Kommunikation des Verbundes von FIG 1,
- FIG 5: ein Ablaufdiagramm,
- FIG 6: eine Ausgabemaske,
- FIG 7: ein Bild eines Werkstücks und eines Werkzeugs und
- FIG 8: ein weiteres Ablaufdiagramm.

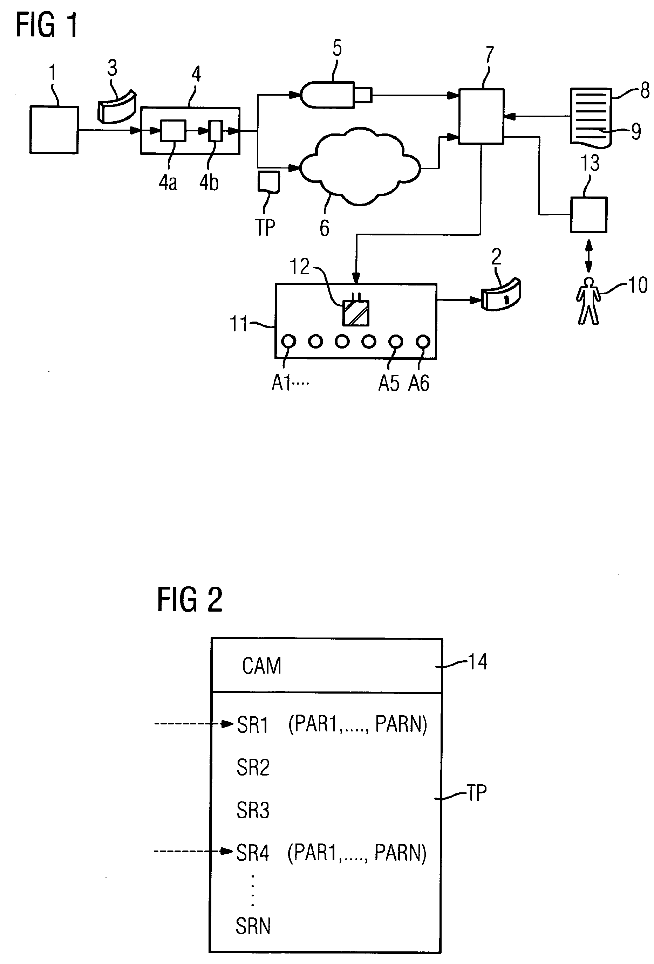

Nachstehend wird in Verbindung mit FIG 1 zunächst die typische Vorgehensweise des Standes der Technik erläutert, auf welcher die vorliegende Erfindung aufbaut.

Gemäß FIG 1 wird zunächst mittels eines CAD-Systems 1 ein herzustellendes Werkstück 2 spezifiziert. Eine (rein geometrische) Beschreibung 3 des Werkstücks 2 wird an ein CAM-Sys¬tem 4 weitergegeben. Das CAM-System 4 umfasst in der Regel einen CAM-Prozessor 4a und einen Postprozessor 4b. Mittels des CAM-Systems 4 wird ein Teileprogramm TP generiert. Der CAM-Prozessor 4a ist für ein Muster von Verfahrbewegungen zuständig. In der Regel erzeugt der CAM-Prozessor 4a anhand von parametrisierten Masken, die Flächen des Werkstücks 2 zugeordnet werden, eine Abfolge von Werkzeugbahnen. Die Werkzeugbahnen sind in der Regel noch steuerungsneutral definiert. Der Postprozessor 4b setzt die Werkzeugbahnen in eine steuerungsspezifische Folge von Programmanweisungen um. Die Folge von Programmanweisungen bildet in ihrer Gesamtheit das Teileprogramm TP. Das Teileprogramm TP wird - beispielsweise über einen Datenträger 5 oder eine Rechner-Rechner-Verbindung 6 - an eine numerische Steuerung 7 übertragen. Die numerische Steuerung 7 hat dadurch Zugriff auf das Teileprogramm TP. Die Darstellung des Datenträgers 5 als USB-Memorystick ist rein beispielhaft. Die Rechner-Rechner-Verbindung 6 kann - je nach Lage des Einzelfalls - als LAN (= local area network), als WAN (= wide area network) oder als WWW (= world wide web) ausgebildet sein.

Die numerische Steuerung 7 ist mit einem Computerprogramm 8 programmiert. Das Computerprogramm 8 ist in der numerischen Steuerung 7 intern gespeichert, beispielsweise in einem EEPROM oder in einem Flash-EPROM. Das Computerprogramm 8 umfasst Maschinencode 9, der von der numerischen Steuerung 7 unmittelbar ausführbar ist. Das Computerprogramm 8 wird in der Regel vom Hersteller der numerischen Steuerung 7 in der numerischen Steuerung 7 hinterlegt.

Die Ausführung des Maschinencodes 9 durch die numerische Steuerung 7 bewirkt zunächst, dass die numerische Steuerung 7 - nach Vorgabe eines entsprechenden Steuerbefehls durch einen Bediener 10 - das Teileprogramm TP ausführt. Durch Ausführen des Teileprogramms TP wird von der numerischen Steuerung 7 eine Produktionsmaschine 11 gesteuert. Die Produktionsmaschine 11 kann nach Bedarf ausgebildet sein, beispielsweise als Werkzeugmaschine mit drei, vier, fünf, ... lagegeregelten Achsen A1 bis A5. Die Werkzeugmaschine 11 kann als spanende Werkzeugmaschine, als aufbauende Werkzeugmaschine oder als Mischform dieser beiden Arten ausgebildet sein. Durch das Ausführen des Teileprogramms TP (und die entsprechende Steuerung der Produktionsmaschine 11) wird das Werkstück 2 hergestellt.

Ein Hauptprogramm des Teileprogramms TP umfasst gemäß FIG 2 in der Regel Unterprogrammaufrufe SR1, SR2, ... SRN. Es kann sogar ausschließlich aus einer Sequenz von Unterprogrammaufrufen SR1, SR2, ... SRN bestehen.

Einige der Unterprogrammaufrufe SR1, SR2, ... SRN - gemäß FIG 2 die Unterprogrammaufrufe SR1 und SR4 - sind parametrisiert. Diese Teile des Teileprogramms TP sind der numerischen Steuerung 7 daher in parametrisierter Form vorgegeben. In einem derartigen Fall ist das zugehörige Unterprogramm unabhängig vom Teileprogramm TP in der numerischen Steuerung 7 hinterlegt (sogenannter Zyklus). Mittels des zugehörigen Unterprogramms wird der entsprechende Unterprogrammaufruf SR1, SR4 innerhalb der numerischen Steuerung 7 in eine Folge von einzelnen Verfahrbewegungen der lagegeregelten Achsen A1 bis A5 der Produktionsmaschine 11 umgesetzt. Die numerische Steuerung 7 berücksichtigt bei der Umsetzung in die Verfahrbewegungen der lagegeregelten Achsen A1 bis A5 die Parameter PAR1 bis PARN des entsprechenden Unterprogrammaufrufs SR1, SR4. Die Programmanweisung wird also von der numerischen Steuerung 7 beim Ausführen des Teileprogramms TP in eine von den Parametern PAR1 bis PARN abhängige Verfahrbewegung eines Werkzeugs 12 umgesetzt, mittels dessen das Werkstück 2 bearbeitet wird.

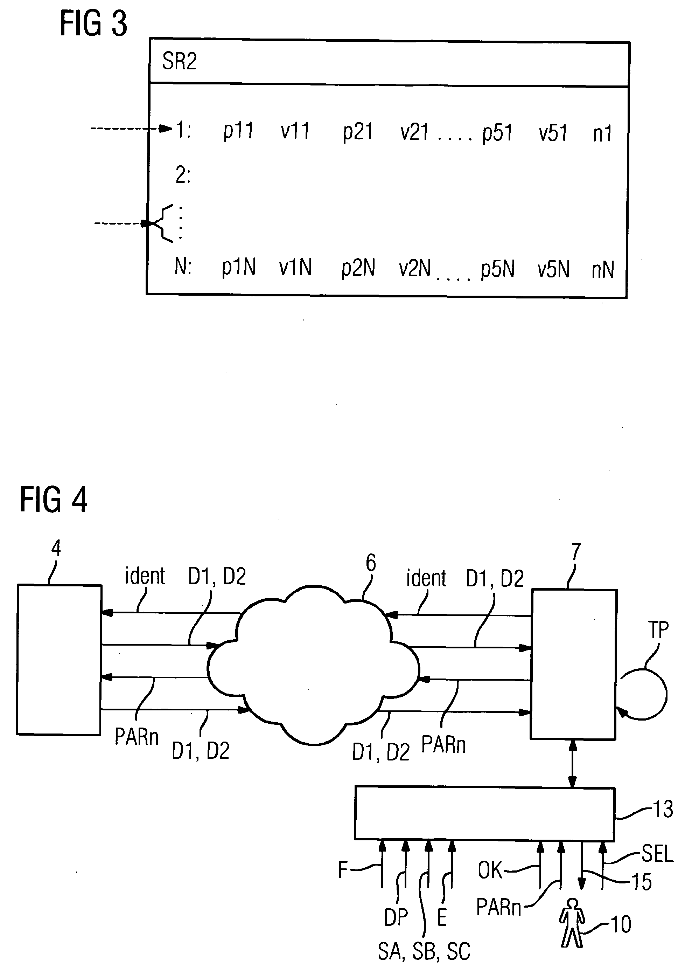

Andere der Unterprogrammaufrufe SR1, SR2, ... SRN - gemäß FIG 2 die Unterprogrammaufrufe SR2 und SR3 - sind nicht parametrisiert. In diesem Fall sind die zugehörigen Unterprogramme Bestandteil des Teileprogramms TP. Sie bestehen gemäß FIG 3 in der Regel aus einer (meist sehr langen) Abfolge einzelner Verfahrbewegungen der lagegeregelten Achsen A1 bis A5. Für jede einzelne Verfahrbewegung ist für jede lagegeregelte Achse A1 bis A5 ein jeweiliger Positionswert p11 bis p51, p1N bis p5N vorgegeben. Weiterhin ist meist für jede lagegeregelte Achse A1 bis A5 ein jeweiliger Geschwindigkeitswert v11 bis v51, v1N bis v5N vorgegeben. Weiterhin ist in manchen Fällen für mindestens eine drehzahlgeregelte Achse A6 eine Drehzahl n1 bis nN vorgegeben.

Es ist möglich, dass die nicht parametrisierten Unterprogrammaufrufe SR2, SR3 als solche entfallen und stattdessen die Abfolgen der einzelnen Verfahrbewegungen der lagegeregelten Achsen A1 bis A5 und gegebenenfalls auch der drehzahlgeregelten Achse A6 im Hauptprogramm des Teileprogramms TP enthalten sind.

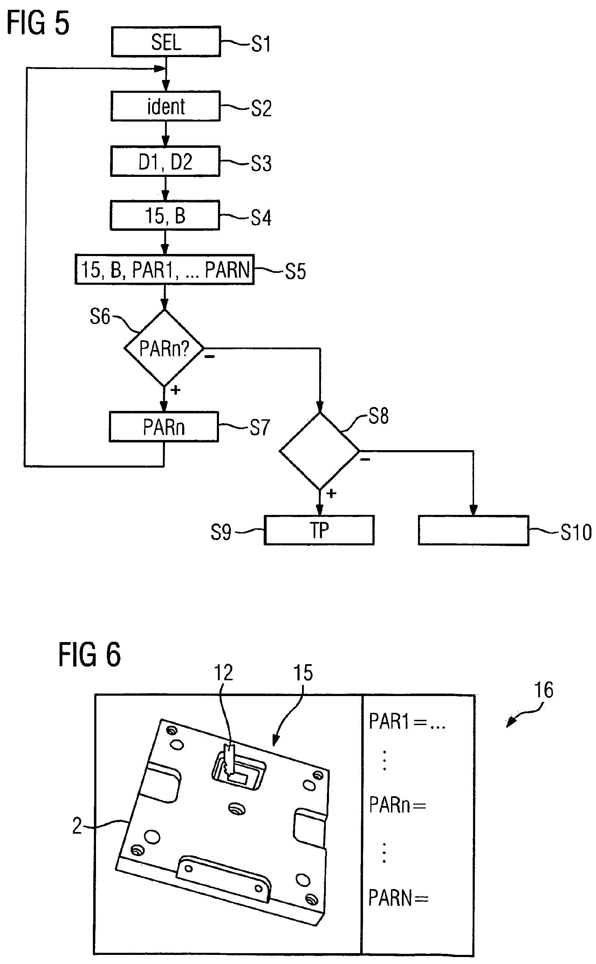

Das Computerprogramm 8, mit dem die numerische Steuerung 7 programmiert ist, bewirkt über die Ausführung des Teileprogramms TP hinaus, dass der Bediener 10 über eine Bedienerschnittstelle 13 der numerischen Steuerung 7 mit der numerischen Steuerung 7 kommunizieren kann und die numerische Steuerung 7 hierauf aufbauende Tätigkeiten ausführt. Das entsprechende Betriebsverfahren, das Gegenstand der vorliegenden Erfindung ist, wird nachfolgend in Verbindung mit den FIG 4 und 5 näher erläutert.

Gemäß den FIG 4 und 5 kann der Bediener 10 der numerischen Steuerung 7 in einem Schritt S1 über die Bedienerschnittstelle 13 einen Auswahlbefehl SEL vorgegeben. Mittels des Auswahlbefehls SEL wird mindestens eine Programmanweisung des Teileprogramms TP selektiert. Beispielsweise kann der Bediener 10, wie in FIG 2 durch gestrichelte Pfeile angedeutet ist, einen Unterprogrammaufruf SR1, SR4 selektieren, welcher der numerischen Steuerung 7 in parametrisierter Form vorgegeben ist, dessen zugehöriges Unterprogramm also unabhängig vom Teileprogramm TP in der numerischen Steuerung 7 hinterlegt ist. Alternativ kann der Bediener 10 eines der Unterprogramme SR2, SR3 selektieren, die weder im Teileprogramm TP noch in der numerischen Steuerung 7 in parametrisierter Form vorliegen. Ebenso kann der Bediener 10 innerhalb eines der Unterprogramme SR2, SR3 eine oder mehrere der dortigen Programmanweisungen selektieren. Dies ist in FIG 3 durch gestrichelte Pfeile angedeutet.

Der numerischen Steuerung 7 ist bekannt, mit welchem CAM-System 4 sie kommunizieren soll. Beispielsweise kann der numerischen Steuerung 7 vom Bediener 10 eine entsprechende Information vorgegeben werden. Auch kann die entsprechende Information fest in der numerischen Steuerung 7 hinterlegt sein. Vorzugsweise enthält das Teileprogramm TP gemäß FIG 2 einen Header 14, in dem die entsprechende Information hinterlegt ist. In diesem Fall kann die numerische Steuerung 7 das zugehörige CAM-System 4 anhand des Headers 14 selbsttätig ermitteln. Vorzugsweise handelt es sich bei dem CAM-System 4 um das CAM-System 4, mittels dessen das Teileprogramm TP generiert wurde. Die Information als solche kann beliebiger Natur sein. Beispielsweise kann sie in Form einer URL (universal resource locator) hinterlegt sein.

Aufgrund des Auswahlbefehls SEL übermittelt die numerische Steuerung 7 gemäß den FIG 4 und 5 in einem Schritt S2 über die Rechner-Rechner-Verbindung 6 direkt oder indirekt eine Information ident an das CAM-System 4. Die Information ident identifiziert die mindestens eine selektierte Programmanweisung. Beispielsweise kann die entsprechende Information ident die Zeilennummer oder die Zeilennummern des Hauptprogramms des Teileprogramms TP oder eine Kennzeichnung des entsprechenden Unterprogramms SR2, SR3 und dort die Zeilennummer oder die Zeilennummern umfassen.

Aufgrund der Information ident ermittelt das CAM-System 4 die korrespondierende Programmanweisung des Teileprogramms TP und die Parametrierung dieser Programmieranweisung. Weiterhin ermittelt das CAM-System 4 Geometriedaten D1. Die Geometriedaten D1 beschreiben die dreidimensionale Geometrie des Werkstücks 2, wie sie sich ergibt, wenn die Bearbeitung des Werkstücks 2 bis - genauer: bis einschließlich - der selektierten Programmanweisung ausgeführt wird. Die ermittelten Geometriedaten D1 sind realitätsgetreu. Dies gilt insbesondere für Abmessungen und Winkel. Weiterhin beschreiben die Geometriedaten D1 auch die durch die Bearbeitung bewirkte Kontur im Gesamtzusammenhang des Werkstücks 2, also auch beispielsweise die Anordnung der Kontur innerhalb des Werkstücks 2.

Vorzugsweise ermittelt das CAM-System 4 zusätzlich zu den Geometriedaten D1 Bahndaten D2. Die Bahndaten D2 beschreiben, entlang welcher Bahn B ein Werkzeug 12 (siehe FIG 6) entlang des Werkstücks 2 im Rahmen der Ausführung der Programmieranweisungen und damit der Bearbeitung des Werkstücks 2 verfahren wird. Vorzugsweise umfassen die Bahndaten D2 auch andere Parameter wie beispielsweise einen Anstellwinkel des Werkzeugs 12 relativ zum Werkstück 2.

Die ermittelten Daten D1, D2 - also zumindest die Geometriedaten D1, vorzugsweise auch die Bahndaten D2 - übermittelt das CAM-System 4 über die Rechner-Rechner-Verbindung 6 an die numerische Steuerung 7. Die numerische Steuerung 7 nimmt die Daten D1, D2 in einem Schritt S3 entgegen.

In einem Schritt S4 ermittelt die numerische Steuerung 7 anhand der Geometriedaten D1 (mindestens) ein Bild 15 des Werkstücks 2. Das Bild 15 entspricht also einer Darstellung des Werkstücks 2, wie es sich ergibt, wenn die Bearbeitung des Werkstücks 2 bis - genauer: bis einschließlich - der selektierten Programmanweisung ausgeführt wird. Die numerische Steuerung 7 gibt das Bild 15 zusammen mit den Parametern PAR1 bis PARN in einem Schritt S5 über die Bedienerschnittstelle 13 an den Bediener 10 der numerischen Steuerung 7 aus. FIG 6 zeigt rein beispielhaft die entsprechende Darstellung in einer Ausgabemaske 16.

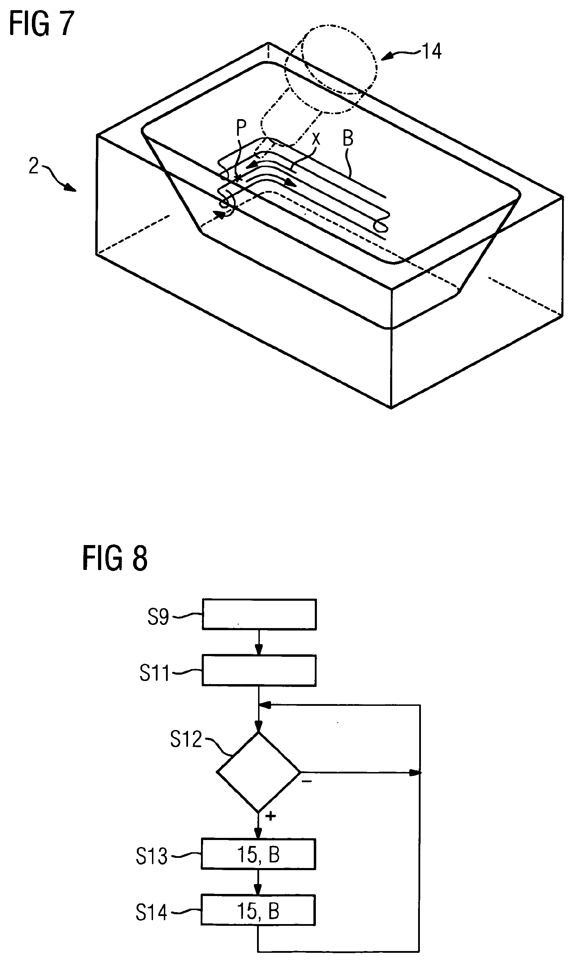

Falls die übermittelten Daten D1, D2 auch die Bahndaten D2 umfassen, blendet die numerische Steuerung 7 entsprechend der Darstellung in FIG 7 vorzugsweise auch die Bahn B in das Bild 15 ein. Gegebenenfalls kann das Einblenden der Bahn B vom Bediener 10 angewählt und abgewählt werden.

Die Ausgabe der Parameter PAR1 bis PARN erfolgt in einer vom Bediener 10 änderbaren Form. Der Bediener 10 kann die Parameter PAR1 bis PARN also ändern. Die numerische Steuerung 7 prüft daher in einem Schritt S6, ob ihr vom Bediener 10 eine derartige Änderung vorgegeben wurde. Wenn dies der Fall ist, wenn also der Bediener 10 einen der Parameter PAR1 bis PARN ändert - beispielsweise den Parameter PARn -, geht die numerische Steuerung 7 zu einem Schritt S7 über. Im Schritt S7 übermittelt die numerische Steuerung 7 die Änderung an das CAM-System 4. Sodann geht die numerische Steuerung 7 zum Schritt S2 zurück. Die Übermittlung kann sofort nach der Vorgabe der Änderung erfolgen. Alternativ kann die numerische Steuerung 7 abwarten, dass ihr vom Bediener 10 ein entsprechender Freigabebefehl F vorgegeben wird.

In beiden Fällen ermittelt das CAM-System 4 erneut die Daten D1, D2, also zumindest die Geometriedaten D1 und vorzugsweise auch die Bahndaten D2. Die erneut ermittelten Daten D1, D2 korrespondieren mit dem Werkstück 2, wie es sich ergibt, wenn das Teileprogramm TP bis zur (genauer: bis einschließlich der) geänderten Programmanweisung ausgeführt wird. Die numerische Steuerung 7 nimmt im Schritt S3 die Daten D1, D2 entgegen, ermittelt im Schritt S4 das zugehörige Bild 15 und gibt das Bild 15 im Schritt S5 über die Bedienerschnittstelle 13 an den Bediener 10 aus.

Das dargestellte Bild 15 korrespondiert somit mit der Bearbeitung des Werkstücks 2, wie sie sich ergibt, wenn das Teileprogramm TP bis zur selektierten Programmanweisung in der momentan gültigen Parametrisierung ausgeführt wird. Der Bediener 10 der numerischen Steuerung 7 kann daher nach Bedarf Änderungen der Parametrisierung der selektierten Programmanweisung vornehmen und erhält jeweils das realitätsgetreue Bild 15 der korrespondierenden Bearbeitung. Der Bediener 10 kann dadurch sehr effizient die selektierte Programmanweisung optimieren.

Falls der numerischen Steuerung 7 keine Änderung eines der Parameter PAR1 bis PARN vorgegeben wurde, prüft die numerische Steuerung 7 in einem Schritt S8, ob ihr vom Bediener 10 über die Bedienerschnittstelle 13 ein Speicherbefehl OK vorgegeben wurde. Wenn dies der Fall ist, geht die numerische Steuerung 7 zu einem Schritt S9 über, in welchem sie das - im Regelfall geänderte - Teileprogramm TP speichert. Wenn das Teileprogramm TP nur in einem oder mehreren seiner Zyklen ge¬ändert wurde, ist zur Implementierung des Schrittes S9 keine Kommunikation mit dem CAM-System 4 erforderlich. Anderenfalls fordert die numerische Steuerung 7 im Rahmen des Schrittes S8 vom CAM-System 4 das neue, modifizierte Teileprogramm TP an. Das modifizierte Teileprogramm TP entspricht mit Ausnahme der vom Bediener 10 geänderten Programmanweisungen dem ursprünglichen Teileprogramm TP. Anstelle der ursprünglich selektierten Programmanweisungen enthält das Teileprogramm TP jedoch nunmehr die geänderten Programmanweisungen.

Falls der numerischen Steuerung 7 kein Speicherbefehl OK vorgegeben wurde, ergreift die numerische Steuerung 7 in einem Schritt S10 andere Maßnahmen. Die Implementierung des Schrittes S10 kann nach Bedarf sein. Sie kann beispielsweise ein Beenden in des obenstehend in Verbindung mit den FIG 4 und 5 erläuterten Ablaufs sein. Alternativ kann die Implementierung des Schrittes S10 eine Prüfung umfassen, ob eine derartige Beendigung vorgenommen werden soll. Wenn keine Beendigung vorgenommen werden soll, kann die numerische Steuerung 7 beispielsweise zum Schritt S6 zurückgehen.

Ausgehend von der obenstehend erläuterten Grundformen der vorliegenden Erfindung sind verschiedene Ausgestaltungen möglich. So ist es beispielsweise möglich, dass der Bediener 10 der numerischen Steuerung 7 Darstellungsparameter DP (siehe FIG 4) vorgibt und die numerische Steuerung 7 das Bild 15 - unabhängig davon, ob es sich bei dem Bild 15 um das ursprüngliche Bild oder um das geänderte Bild handelt - entsprechend den vorgegebenen Darstellungsparametern DP ermittelt. Beispielsweise ist es möglich, dass der Bediener 10 eine von mehreren Ansichten auswählt, beispielsweise eine isometrische oder eine dimetrische Ansicht, eine Seitenansicht, eine Draufsicht, einen Schnitt usw. Auch ist es möglich, dass beispielsweise von der numerischen Steuerung 7 über die Bedienerschnittstelle 13 eine perspektivische Darstellung des Werkstücks 2 ausgegeben wird und dass der Bediener 10 das dargestellte Werkstück 2 kontinuierlich um eine Achse rotieren lässt, wobei der Bediener 10 zusätzlich auch Lage und Orientierung der Achse und eventuell auch eine Drehgeschwindigkeit festlegen kann. Auch ist es möglich, dass der Bediener 10 eine Drehung anhält und wieder freigibt. Ähnliche Vorgehensweisen sind bei Schnitten möglich, bei denen beispielsweise ein etappenweises Fortschreiten in einer bestimmten Richtung realisiert werden kann.

Wie bereits erwähnt, ist es möglich, dass die Daten D1, D2 zusätzlich zu den Geometriedaten D1 die Bahndaten D2 umfassen und dass die numerische Steuerung 7 die daraus resultierende Bahn B in das Bild 15 einblendet. FIG 7 zeigt exemplarisch eine derartige Darstellung. Es ist möglich, wie in FIG 7 ebenfalls dargestellt, dass die numerische Steuerung 7 zusätzlich das Werkzeug 12 in das Bild 15 einblendet. In diesem Fall verfährt die numerische Steuerung 7 das Werkzeug 12 entlang der Bahn B. Das Verfahren des Werkzeugs 12 entlang der Bahn B ist in FIG 7 dadurch angedeutet, dass eine Verfahrrichtung x mit eingezeichnet ist. Die Verfahrrichtung x hängt im Regelfall vom Ort des Werkzeugs 12 auf der Bahn B ab.

Vorzugsweise kann der Bediener 10 der numerischen Steuerung 7 gemäß FIG 4 weiterhin ein Steuerkommando SA vorgeben. In Abhängigkeit von dem Steuerkommando SA stoppt die numerische Steuerung 7 in dem an den Bediener 10 ausgegebenen Bild 15 das Verfahren des Werkzeugs 12 und nimmt das Verfahren des Werkzeugs 12 wieder auf. Es ist möglich, dass hierfür voneinander verschiedene Steuerkommandos SA verwendet werden. Alternativ ist es möglich, dass hierfür ein und dasselbe Steuerkommando SA verwendet wird, so dass die jeweilige Vorgabe des Steuerkommandos SA jeweils vom einen in den anderen Zustand umschaltet.

Alternativ oder zusätzlich zum Stoppen und Wiederaufnehmen des Verfahrens des Werkzeugs 12 in dem Bild 15 ist es möglich, dass der Bediener 10 der numerischen Steuerung 7 gemäß FIG 4 mittels eines (anderen) Steuerkommandos SB eine Ge¬schwindigkeit einstellt, mit der das Werkzeug 12 in dem Bild 15 verfahren wird. Beispielsweise ist es möglich, dass der Bediener 10 eine von mehreren Geschwindigkeiten auswählt. Alternativ oder zusätzlich ist es möglich, dass der Bediener 10 - beispielsweise mittels einer plus-minus-Funktion - die Geschwindigkeit, ausgehend von der momentanen Geschwindigkeit, erhöht oder erniedrigt. Unter Umständen kann sogar eine Richtungsumkehr möglich sein.

Weiterhin kann es möglich sein, dass der Bediener 10 im gestoppten Zustand des Werkzeugs 12 das Werkzeug 12, ausgehend von der momentanen Position des Werkzeugs 12, mittels einer plus-minus-Funktion schrittweise vor oder zurück versetzt.

Weiterhin ist es beispielsweise möglich, dass der Bediener 10 eine bestimmte Position P (siehe FIG 7) auf der Bahn B mittels eines Cursors oder auf andere Weise markiert oder der numerischen Steuerung 7 auf andere Weise die bestimmte Position P vorgibt. In diesem Fall kann die numerische Steuerung 7 in Reaktion auf die Vorgabe der Position P das Werkzeug 12 an dieser Position P positionieren. Diese Vorgehensweise kann unabhängig davon ergriffen werden, ob das Werkzeug 12 in dem Bild 15 verfahren wird oder nicht. Wenn zum Zeitpunkt der Vorgabe der Position P das Werkzeug 12 in dem Bild 15 verfahren wird, wird vorzugsweise das Werkzeug 12 in dem Bild 15 an der Position P positioniert und verbleibt dann an der Position P. Das Werkzeug 12 wird also an der Position P gestoppt. Es ist prinzipiell jedoch auch möglich, dass das Werkzeug 12 zwar entsprechend positioniert wird, die Verfahrbewegung jedoch ausgehend von der Position beibehalten wird.

In der Regel wird das Verfahren des Werkzeugs 12 in dem Bild 15 dadurch realisiert werden, dass das Bild 15 des Werkstücks 2 (genauer: dessen Positionierung) unverändert beibehalten wird und das Werkzeug 12 in dem Bild 15 verfahren wird. Das Werkstück 2 scheint also stillzustehen, das Werkzeug 12 verfahren zu werden. Prinzipiell ist jedoch auch die umgekehrte Vorgehensweise möglich, dass also das Werkzeug 12 (genauer: dessen Positionierung) in dem Bild 15 unverändert beibehalten wird und das Werkstück 2 verfahren wird. Es ist weiterhin möglich, dass der Bediener 10 der numerischen Steuerung 7 gemäß FIG 4 ein Steuerkommando SC vorgibt und dass die numerische Steuerung 7 in Abhängigkeit von dem Steuerkommando SC die eine oder die andere Vorgehensweise ergreift.

FIG 8 zeigt eine Vorgehensweise, die auf der Vorgehensweise von FIG 5 aufbaut. Gemäß FIG 8 nimmt die numerische Steuerung 7 nach dem Abspeichern des Teileprogramms TP im Schritt S9 in einem Schritt S11 vom Bediener einen Ausführungsbefehl E entgegen. Aufgrund der Vorgabe des Ausführungsbefehls E führt die numerische Steuerung 7 das Teileprogramm TP aus. Mittels der Werkzeugmaschine 11 wird also ein reales Werkstück 2 bearbeitet. Simultan zu dieser Bearbeitung führt die numerische Steuerung Schritte S12 bis S14 aus.

Im Schritt S12 prüft die numerische Steuerung 7, ob die geänderte Programmanweisung (oder im Falle der Änderung mehrerer Programmanweisungen eine der geänderten Programmanweisungen) ausgeführt wird. Wenn dies der Fall ist, geht die numerische Steuerung 7 zum Schritt S13 über. Im Schritt S13 ermittelt die numerische Steuerung 7 anhand der zugehörigen Geometriedaten D1 das zugehörige Bild 15 und anhand der zugehörigen Bahndaten D2 die zugehörige Bahn B. Im Schritt S14 gibt die numerische Steuerung 7 das ermittelte Bild 15 einschließlich der zugehörigen Bahn B über die Bedienerschnittstelle 13 an den Bediener 10 aus. In das Bild 15 blendet die numerische Steuerung 7 auch das Werkzeug 12 ein und verfährt es. Das Verfahren des Werkzeugs 12 ist vorzugsweise mit der realen Bearbeitung des Werkstücks 2 gekoppelt. Die numerische Steuerung 7 verfährt also vorzugsweise in dem Bild 15 das Werkzeug 12 entsprechend der realen Bearbeitung des Werkstücks 2 entlang der in das Bild 15 eingeblendeten Bahn B. Hierbei kann je nach Wahl des Bedieners 10 das Bild 15 des Werkstücks 2 (genauer: dessen Positionierung) unverändert beibehalten und das Werkzeug 12 in dem Bild 15 verfahren werden oder umgekehrt das Werkzeug 12 in dem Bild 15 unverändert beibehalten und das Werkstück 2 verfahren werden.

Die vorliegende Erfindung weist viele Vorteile auf. Insbesondere steht dem Bediener 10 der numerischen Steuerung 7 jederzeit ein realistisches Bild 15 zur Verfügung, anhand dessen er die von ihm vorgenommenen Änderungen einer Programmanweisung realistisch beurteilen kann. Er kann das Werkstück 2 aus allen Richtungen betrachten. Dies ermöglicht dem Bediener 10 auf schnelle und einfache Weise, zu erkennen, welche Programmanweisungen für welche geometrischen Elemente des Werkstücks 2 verantwortlich sind und wie das Werkzeug 12 hierfür technologisch eingesetzt werden kann. Ferner wird für den Bediener 10 auch der direkte Bezug der Parameter PAR1 bis PARN einer bestimmten Programmanweisung zu dem Werkstück 2 bzw. einem bestimmten geometrischen Element des Werkstücks 2 ersichtlich.

Zusammengefasst betrifft die vorliegende Erfindung somit folgenden Sachverhalt:
Eine numerische Steuerung 7 hat Zugriff auf ein Teileprogramm TP. Sie steuert durch Ausführen des Teileprogramms TP eine Produktionsmaschine 11. Der numerischen Steuerung 7 wird von einem Bediener 10 ein Auswahlbefehl SEL vorgegeben, mittels dessen eine mit mindestens einem Parameter PAR1 bis PARN parametrierte Programmanweisung des Teileprogramms TP selektiert wird. Beim Ausführen des Teileprogramms TP wird die Programmanweisung in eine von dem Parameter PAR1 bis PARN abhängige Verfahrbewegung eines das Werkstück 2 bearbeitenden Werkzeugs 12 umgesetzt. Die numerische Steuerung 7 übermittelt eine die Programmanweisung identifizierende Information ident an ein CAM-System 4. Sie nimmt von dem CAM-System 4 Daten D1, D2 entgegen, welche zumindest die dreidimensionale Geometrie des Werkstücks 2 beschreiben, wie sie sich bei einer Ausführung des Teileprogramms TP bis zur selektierten Programmanweisung ergibt. Sie ermittelt anhand der Daten D1, D2 mindestens ein Bild 15 des Werkstücks 2. Sie gibt den Parameter PAR1 bis PARN der parametrisierten Programmanweisung in vom Bediener 10 änderbarer Form und das Bild 15 an den Bediener 10 aus. Im Falle einer Änderung eines Parameters PARn der Programmanweisung übermittelt sie die Änderung an das CAM-System 4, nimmt von dem CAM-System 4 geänderte Daten D1, D2 entgegen, ermittelt anhand der geänderten Daten D1, D2 mindestens ein geändertes Bild 15 des Werkstücks 2 und gibt das geänderte Bild 15 an den Bediener 10 aus. Weiterhin speichert sie, sobald sie vom Bediener 10 einen entsprechenden Speicherbefehl OK entgegengenommen hat, ein entsprechend der geänderten Programmanweisung modifiziertes Teileprogramm TP.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine numerische Steuerung (7),
- wobei die numerische Steuerung (7) Zugriff auf ein Teileprogramm (TP) hat, das von der numerischen Steuerung (7) ausführbar ist,
- wobei von der numerischen Steuerung (7) durch Ausführen des Teileprogramms (TP) eine Produktionsmaschine (11) steuerbar ist,
- wobei der numerischen Steuerung (7) von einem Bediener (10) über eine Bedienerschnittstelle (13) ein Auswahlbefehl (SEL) vorgegeben wird, mittels dessen eine Programmanweisung des Teileprogramms (TP) selektiert wird, der mindestens ein Parameter (PAR1 bis PARN) zugeordnet ist,
- wobei die selektierte Programmanweisung beim Ausführen des Teileprogramms (TP) von der numerischen Steuerung (7) in eine von dem mindestens einen Parameter (PAR1 bis PARN) abhängige Verfahrbewegung eines das Werkstück (2) bearbeitenden Werkzeugs (12) umgesetzt wird,
- wobei die numerische Steuerung (7) anhand von Daten (D1, D2), welche zumindest die dreidimensionale Geometrie des Werkstücks (2) beschreiben, mindestens ein Bild (15) des Werkstücks (2) ermittelt,
- wobei die numerische Steuerung (7) den mindestens einen Parameter (PAR1 bis PARN) der parametrisierten Programmanweisung in vom Bediener (10) änderbarer Form und das Bild (15) über die Bedienerschnittstelle (13) an den Bediener (10) der numerischen Steuerung (7) ausgibt,
- wobei die numerische Steuerung (7) im Falle einer Änderung eines Parameters (PARn) der selektierten Programmanweisung anhand geänderter Daten (D1, D2), welche zumindest die geänderte dreidimensionale Geometrie des Werkstücks (2) beschreiben, mindestens ein geändertes Bild (15) des Werkstücks (2) ermittelt und das geänderte Bild (15) über die Bedienerschnittstelle (13) an den Bediener (10) der numerischen Steuerung (7) ausgibt,
- wobei die numerische Steuerung (7), sobald sie vom Bediener (10) einen entsprechenden Speicherbefehl (OK) entgegengenommen hat, ein entsprechend der geänderten Programmanweisung modifiziertes Teileprogramm (TP) speichert,
**dadurch gekennzeichnet,**
- **dass** die numerische Steuerung (7) eine die selektierte Programmanweisung identifizierende Information (ident) über eine Rechner-Rechner-Verbindung (6) direkt oder indirekt an ein CAM-System (4) übermittelt,
- **dass** die numerische Steuerung (7) die Daten (D1, D2), welche zumindest die dreidimensionale Geometrie des Werkstücks (2) beschreiben, von dem CAM-System (4) entgegennimmt,
- **dass** die numerische Steuerung (7) im Falle einer Änderung eines Parameters (PARn) der selektierten Programmanweisung die Änderung an das CAM-System (4) übermittelt und die geänderten Daten (D1, D2) von dem CAM-System (4) entgegennimmt und
- **dass** die Daten (D1, D2) und die geänderten Daten (D1, D2) die dreidimensionale Geometrie des Werkstücks (2) beschreiben, wie sie sich bei einer Ausführung des Teileprogramms (TP) bis einschließlich zur selektierten bzw. bis einschließlich zur geänderten Programmanweisung ergibt.

2. Betriebsverfahren nach Anspruch 1,
**dadurch gekennzeichnet,**
**dass** die numerische Steuerung (7) vom Bediener (10) Darstellungsparameter (DP) entgegennimmt und dass die numerische Steuerung (7) das Bild (15) und das geänderte Bild (15) entsprechend den vorgegebenen Darstellungsparametern (DP) ermittelt.

3. Betriebsverfahren nach Anspruch 1 oder 2,
**dadurch gekennzeichnet,**
**dass** die Daten (D1, D2) und die geänderten Daten (D1, D2) zusätzlich Bahndaten (D2) umfassen, welche eine Bahn (B) des das Werkstück (2) bearbeitenden Werkzeugs (12) beschreiben, und dass die numerische Steuerung (7) die Bahn (B) in das Bild (15) und das geänderte Bild (15) einblendet.

4. Betriebsverfahren nach Anspruch 3,
**dadurch gekennzeichnet,**
**dass** die numerische Steuerung (7) in das Bild (15) zusätzlich das Werkzeug (12) einblendet und entlang der Bahn (B) verfährt.

5. Betriebsverfahren nach Anspruch 4,
**dadurch gekennzeichnet,**
**dass** die numerische Steuerung (7) das Verfahren des Werkzeugs (12) in dem Bild (15) in Reaktion auf vom Bediener (10) eingegebene Steuerkommandos (SA) stoppt und wieder aufnimmt und/ oder dass die numerische Steuerung (7) eine Geschwindigkeit, mit der das Werkzeug (12) in dem Bild (15) verfahren wird, in Abhängigkeit von Steuerkommandos (SB) des Bedieners einstellt.

6. Betriebsverfahren nach Anspruch 5,
**dadurch gekennzeichnet,**
**dass** die numerische Steuerung (7) vom Bediener (10) eine Position (P) entlang der Bahn (B) entgegennimmt und dass die numerische Steuerung (7) beim Stoppen des Werkzeugs (12) in dem Bild (15) das Werkzeug (12) in dem Bild (15) an der vom Bediener (10) entgegengenommenen Position (P) positioniert.

7. Betriebsverfahren nach Anspruch 4, 5 oder 6,
**dadurch gekennzeichnet,**
**dass** die numerische Steuerung (7) vom Bediener (10) ein Steuerkommando (SC) entgegennimmt und dass die numerische Steuerung (7) in Abhängigkeit von dem Steuerkommando (SC) in dem Bild (15) entweder bei unveränderter Darstellung des Werkstücks (2) das Werkzeug (12) verfährt oder bei unveränderter Darstellung des Werkzeugs (12) das Werkstück (2) verfährt.

8. Betriebsverfahren nach einem der Ansprüche 4 bis 7,
**dadurch gekennzeichnet,**
**dass** die numerische Steuerung (7) durch Ausführen des Teileprogramms (TP) ein reales Werkstück (2) bearbeitet und dass die numerische Steuerung (7) das Werkzeug (12) in dem Bild (15) entsprechend der realen Bearbeitung des Werkstücks (2) entlang der in das Bild (15) eingeblendeten Bahn (B) verfährt.

9. Betriebsverfahren nach einem der obigen Ansprüche,
**dadurch gekennzeichnet,**
**dass** die selektierte Programmanweisung des Teileprogramms (TP) entweder Bestandteil einer Sequenz (SR1, SR4) ist, die in der numerischen Steuerung (7) in parametrisierter Form hinterlegt ist, oder Bestandteil einer Sequenz (SR2, SR3) ist, die weder im Teileprogramm (TP) noch in der numerischen Steuerung (7) in parametrisierter Form vorliegt.

10. Betriebsverfahren nach einem der obigen Ansprüche,
**dadurch gekennzeichnet,**
**dass** die numerische Steuerung (7) im Falle einer Änderung des Parameters (PAR1 bis PARN) der selektierten Programmanweisung entweder sofort oder erst nach der Eingabe eines entsprechenden Freigabebefehls (F) durch den Bediener (10)
- die Änderung an das CAM-System (4) übermittelt,
- von dem CAM-System (4) die geänderten Daten (D1, D2) entgegennimmt,
- das geänderte Bild (15) des Werkstücks (2) ermittelt und
- das geänderte Bild (15) an den Bediener (10) der numerischen Steuerung (7) ausgibt.

11. Computerprogramm, wobei das Computerprogramm Maschinencode (9) umfasst, der von einer numerischen Steuerung (7) unmittelbar ausführbar ist, wobei die Ausführung des Maschinencodes (9) durch die numerische Steuerung (7) bewirkt, dass die numerische Steuerung (7) ein Betriebsverfahren nach einem der obigen Ansprüche ausführt.

12. Numerische Steuerung, in der ein von der numerischen Steuerung ausführbares Computerprogramm (8) nach Anspruch 11 gespeichert ist.

## Claims

1. Method of operation for a numerical controller (7),
- wherein the numerical controller (7) has access to a parts program (TP) which can be executed by the numerical controller (7),
- wherein a production machine (11) can be controlled by the numerical controller (7) by execution of the parts program (TP),
- wherein an operator (10) issues to the numerical controller (7), via an operator interface (13), a selection command (SEL) which effects the selection in the parts program (TP) of a program instruction to which is assigned at least one parameter (PAR1 to PARN),
- wherein, when the parts program (TP) is executed by the numerical controller (7), the selected program instruction is converted into a processing movement, of a tool (12) which processes the workpiece (2), which depends on the at least one parameter (PAR1 to PARN),
- wherein the numerical controller (7) determines, by reference to data (D1, D2) which specifies at least the three-dimensional geometry of the workpiece (2), at least one image (15) of the workpiece (2),
- wherein the numerical controller (7) outputs to the operator (10) of the numerical controller (7) via the operator interface (13) the at least one parameter (PAR1 to PARN) of the parameterised program instruction, in a form which can be changed by the operator (10), and the image (15),
- wherein, in the case when a parameter (PARn) of the selected program instruction is changed, the numerical controller (7) determines by reference to changed data (D1, D2), which specifies at least the changed three-dimensional geometry of the workpiece (2), at least one amended image (15) of the workpiece (2) and outputs to the operator (10) of the numerical controller (7) via the operator interface (13) the amended image (15),
- wherein the numerical controller (7), as soon as it has accepted from the operator (10) an appropriate storage command (OK), stores a modified parts program (TP) which corresponds to the changed program instruction,
**characterised in that**,
- the numerical controller (7) communicates directly or indirectly to a CAM system (4), via a computer-to-computer link (6), information (ident) which identifies the selected program instruction,
- the numerical controller (7) accepts in return from the CAM system (4) the data (D1, D2) which specifies at least the three-dimensional geometry of the workpiece (2),
- in the case when a parameter (PARn) of the selected program instruction is changed, the numerical controller (7) communicates the change to the CAM system (4), and accepts in return from the CAM system (4) the changed data (D1, D2), and
- the data (D1, D2) and the changed data (D1, D2) specify the three-dimensional geometry of the workpiece (2), as it would be if the parts program (TP) were executed respectively up to and including the selected program instruction or up to and including the changed program instruction.

2. Method of operation according to claim 1,
**characterised in that**,
the numerical controller (7) accepts display parameters (DP) from the operator (10) and the numerical controller (7) determines the image (15) and the amended image (15) in accordance with the prescribed display parameters (DP).

3. Method of operation according to claim 1 or 2,
**characterised in that**,
the data (D1, D2) and the changed data (D1, D2) include in addition path data (D2), which specifies a path (B) of the tool (12) which is processing the workpiece (2), and the numerical controller (7) inserts the path (B) into the image (15) and the amended image (15).

4. Method of operation according to claim 3,
**characterised in that**,
the numerical controller (7) inserts additionally into the image (15) the tool (12) and moves it along the path (B).

5. Method of operation according to claim 4,
**characterised in that**,
the numerical controller (7) stops and resumes the movement of the tool (12) in the image (15) in response to control commands (SA) input by the operator (10) and/or the numerical controller (7) sets the speed at which the tool (12) is moved in the image (15) as a function of control commands (SB) from the operator.

6. Method of operation according to claim 5,
**characterised in that**,
the numerical controller (7) accepts from the operator (10) a position (P) along the path (B) and, with the tool (12) stopped in the image (15), the numerical controller (7) positions the tool (12) in the image (15) at the position (P) which it had accepted from the operator (10).

7. Method of operation according to claim 4, 5 or 6, **characterised in that**,
the numerical controller (7) accepts from the operator (10) a control command (SC) and that depending on this control command (SC) the numerical controller (7) either moves the tool (12) in the image (15) while keeping the display of the workpiece unchanged, or with an unchanged display of the tool (12) moves the workpiece (2) in the image (15).

8. Method of operation according to one of the claims 4 to 7, **characterised in that**,
by executing the parts program (TP) the numerical controller (7) processes a real workpiece (2) and the numerical controller (7) moves the tool (12) in the image (15) in correspondence with the real processing of the workpiece (2), along the path (B) which is inserted into the image (15).

9. Method of operation according to one of the above claims, **characterised in that**,
the selected program instruction in the parts program (TP) is either a component of a sequence (SR1, SR4) which is stored in the numerical controller (7) in parameterised form or is a component of a sequence (SR2, SR3) which is not present in parameterised form in either the parts program (TP) or in the numerical controller (7).

10. Method of operation according to one of the above claims, **characterised in that**,
in the case of a change to a parameter (PAR1 to PARN) of the selected program instruction then, either immediately or only after the input of an appropriate release command (F) by the operator (10), the numerical controller (7)
- communicates the change to the CAM system (4),
- accepts in return from the CAM system (4) the changed data (D1, D2),
- determines the amended image (15) of the workpiece (2), and
- outputs the amended image (15) to the operator (10) of the numerical controller (7).

11. Computer program, wherein the computer program includes machine code (9) which can be directly executed by a numerical controller (7), wherein the execution of the machine code (9) by the numerical controller (7) has the effect that the numerical controller (7) executes a method of operation according to one of the above claims.

12. Numerical controller in which is stored a computer program (8) according to claim 11 which can be executed by the numerical controller.

## Revendications

1. Procédé pour faire fonctionner une commande ( 7 ) numérique,
- dans lequel la commande ( 7 ) numérique a accès à un programme ( TP ) de pièces, qui peut être exécuté par la commande ( 7 ) numérique,
- dans lequel une machine ( 11 ) de production peut être commandée par la commande ( 7 ) numérique par exécution du programme ( TP ) de pièces,
- dans lequel il est prescrit à la commande ( 7 ) numérique par un opérateur ( 10 ), par l'intermédiaire d'une interface ( 13 ) opérateur, un ordre ( SEL ) de sélection, au moyen duquel il est sélectionné une instruction du programme ( TP ) de pièces, à laquelle est associé au moins un paramètre ( PAR1 à PARN ),
- dans lequel l'instruction de programme sélectionnée est, lors de l'exécution du programme ( TP ) de pièces par la commande ( 7 ) numérique, transformée en un mouvement de déplacement, dépendant du au moins un paramètre ( PAR1 à PARN ), d'un outil ( 12 ) usinant la pièce ( 2 ),
- dans lequel la commande ( 7 ) numérique détermine à l'aide de données ( D1, D2 ), qui décrivent au moins la géométrie en trois dimensions de la pièce ( 2 ), au moins une image ( 15 ) de la pièce ( 2 ),
- dans lequel la commande ( 7 ) numérique envoie par l'interface ( 13 ) opérateur à l'opérateur ( 10 ) de la commande ( 7 ) numérique le au moins un paramètre ( PAR1 à PARN ) de l'instruction de programme paramétrisée sous une forme modifiable par l'opérateur ( 10 ) et l'image ( 15 ),
- dans lequel la commande ( 7 ) numérique, dans le cas d'une modification d'un paramètre ( PARn ) de l'instruction de programme sélectionnée à l'aide de données ( D1, D2 ) modifiées qui décrivent la géométrie en trois dimensions modifiée de la pièce ( 2 ), détermine au moins une image ( 15 ) modifiée de la pièce ( 2 ) et envoie l'image ( 15 ) modifiée à l'opérateur ( 10 ) de la commande ( 7 ) numérique par l'intermédiaire de l'interface ( 13 ) opérateur,
- dans lequel la commande ( 7 ) numérique mémorise,^^ dès qu'elle a reçu de l'opérateur ( 10 ) une instruction ( OK ) de mémorisation correspondante, un programme ( TP ) de pièces modifié conformément à l'instruction de programmes modifiés,
**caractérisé**
- **en ce que** la commande ( 7 ) numérique transmet directement ou indirectement par l'intermédiaire d'une liaison ( 6 ) ordinateur-ordinateur à un système CAM ( 4 ) l'information ( ident ) identifiant l'instruction de programme sélectionnée,
- **en ce que** la commande ( 7 ) numérique reçoit du système CAM ( 4 ) les données ( D1, D2 ), qui décrivent au moins la géométrie en trois dimensions de la pièce ( 2 ),
- **en ce que** la commande ( 7 ) numérique, dans le cas d'une modification d'un paramètre ( PARn ) de l'instruction de programme sélectionnée, transmet la modification au système CAM ( 4 ) et reçoit les données ( D1, D2 ) modifiées du système CAM ( 4 ) et
- **en ce que** les données ( D1, D2 ) et les données ( D1, D2 ) modifiées décrivent la géométrie en trois dimensions de la pièce ( 2 ) telle qu'elle ressort d'une exécution du programme ( TP ) de pièces, jusqu'à inclusivement l'instruction de programme sélectionnée ou jusqu'à inclusivement l'instruction de programme modifiée.

2. Procédé suivant la revendication 1,
**caractérisé**
**en ce que** la commande ( 7 ) numérique reçoit des paramètres ( DP ) de représentation de l'opérateur ( 10 ) et en ce que la commande ( 7 ) numérique détermine l'image ( 15 ) et l'image ( 15 ) modifiée conformément aux paramètres ( DP ) de représentation donnés à l'avance.

3. Procédé suivant la revendication 1 ou 2,
**caractérisé**
**en ce que** les données ( D1, D2 ) et les données ( D1, D2 ) modifiées contiennent en outre des données ( D2 ) de trajet, qui décrivent un trajet ( B ) de l'outil ( 12 ) usinant la pièce ( 2 ) et en ce que la commande ( 7 ) numérique incruste le trajet ( B ) dans l'image ( 15 ) et dans l'image ( 15 ) modifiée.

4. Procédé suivant la revendication 3,
**caractérisé**
**en ce que** la commande ( 7 ) numérique incruste en outre l'outil ( 12 ) dans l'image et le déplace le long du trajet ( B ).

5. Procédé suivant la revendication 4,
**caractérisé**
**en ce que** la commande ( 7 ) numérique arrête le déplacement de l'outil ( 12 ) dans l'image ( 15 ) en réaction à des commandements ( SA ) de commande entrés par l'opérateur ( 10 ) et le fait reprendre et/ou en ce que la commande ( 7 ) numérique règle une vitesse à laquelle l'outil ( 12 ) est déplacé dans l'image ( 15 ) en fonction du commandement ( SB ) de commande de l'opérateur.

6. Procédé suivant la revendication 5,
**caractérisé**
**en ce que** la commande ( 7 ) numérique reçoit de l'opérateur ( 10 ) une position ( P ) le long du trajet ( B ), et en ce que la commande ( 7 ) numérique positionne, lorsque l'outil ( 12 ) s'arrête dans l'image ( 15 ), l'outil ( 12 ) dans l'image ( 15 ) en la position ( P ) reçue de l'opérateur ( 10 ).

7. Procédé suivant la revendication 4, 5, ou 6,
**caractérisé**
**en ce que** la commande ( 7 ) numérique reçoit un commandement ( SC ) de commande de l'opérateur ( 10 ) et en ce que la commande ( 7 ) numérique déplace l'outil ( 12 ) en fonction du commandement ( SC ) de commande dans l'image ( 15 ), en laissant inchangée une représentation de la pièce ( 2 ) ou déplace la pièce ( 2 ), en laissant inchangée une représentation de l'outil ( 12 ).

8. Procédé suivant l'une des revendications 4 à 7,
**caractérisé**
**en ce que** la commande ( 7 ) numérique usine, en exécutant le programme ( TP ) de pièces, une pièce ( 2 ) réelle et en ce que la commande ( 7 ) numérique déplace l'outil ( 12 ) dans l'image ( 15 ), conformément à l'usinage réel de la pièce, ( 2 ) le long du trajet ( B ) incrusté dans l'image ( 15 ).

9. Procédé suivant l'une des revendications précédentes, **caractérisé**
**en ce que** l'instruction de programme sélectionnée du programme ( TP ) de pièces est un constituant d'une séquence ( SR1, SR4 ) qui est mémorisée sous forme paramétrée dans la commande ( 7 ) numérique ou est un constituant d'une séquence ( SR2, SR3 ) qui n'est présente sous forme paramétrée ni dans le programme ( TP ) de pièces, ni dans la commande ( 7 ) numérique.

10. Procédé suivant l'une des revendications précédentes, **caractérisé**
**en ce que** la commande ( 7 ) numérique, dans le cas d'une modification du paramètre ( PAR1 à PARN ) de l'instruction de programme sélectionnée ou bien immédiatement ou après l'entrée d'une instruction ( F ) correspondante de libération par l'opérateur ( 10 )
- transmet la modification au système CAM ( 4 ),
- reçoit les données ( D1, D2 ) modifiées du système CAM ( 4 ),
- détermine l'image ( 15 ) modifiée de la pièce ( 2 ) et
- envoie l'image ( 15 ) modifiée est envoyée à l'opérateur ( 10 ) de la commande ( 7 ) numérique.

11. Programme d'ordinateur, dans lequel le programme d'ordinateur comprend un code ( 9 ) machine qui peut être exécuté directement par une commande ( 7 ) numérique, l'exécution du code ( 9 ) machine par la commande ( 7 ) numérique faisant que la commande ( 7 ) numérique exécute un procédé suivant l'une des revendications précédentes.

12. Commande numérique dans laquelle un programme ( 8 ) d'ordinateur suivant la revendication 11, pouvant être réalisé par la commande numérique, est mémorisé.
